# EUROPEAN PATENT SPECIFICATION

(11) **EP 2 866 419 B1**
(45) Date of publication and mention of the grant of the patent: **04.04.2018**
(21) Application number: 13807629.4
(22) Date of filing: 07.06.2013
(51) Int. Cl.: H04L 29/08, H04W 4/14, H04W 12/06, H04W 4/00, H04L 29/06, H04W 12/04, H04W 76/02, H04W 80/06, H04W 80/04

(54) **METHOD AND SYSTEM FOR IMPLEMENTING SMART CARD REMOTE OPERATION**
VERFAHREN UND SYSTEM ZUR IMPLEMENTIERUNG EINER SMART-CARD-FERNBEDIENUNG
PROCÉDÉ ET SYSTÈME POUR METTRE EN OEUVRE UN FONCTIONNEMENT À DISTANCE DE CARTE INTELLIGENTE

(30) Priority: 21.06.2012 CN 201210206396
(43) Date of publication of application: 29.04.2015
(73) Proprietor: Huizhou TCL Mobile Communication Co., Ltd., Huizhou, Guangdong 516006 (CN)
(72) Inventor: WU, Zhonghe, Huizhou Guangdong 516006 (CN)
(74) Representative: Brachmann, Roland W.
(86) International application number: PCT/CN2013/076897
(87) International publication number: WO 2013/189245

(56) References cited:
- EP-A1- 2 045 992
- CN-A- 101 313 622
- CN-A- 102 067 122
- CN-A- 102 752 375
- US-A1- 2009 119 634
- US-A1- 2010 255 819
- US-A1- 2011 047 257
- DONG, HUI ET AL.: 'Analysis of the Value-added Services Based on SCWS Technology' INFORMATION AND COMMUNICATIONS TECHNOLOGIES vol. 2, 15 April 2011, pages 37 - 41, XP008175972

## Description

The present invention relates to smart card remote operation and data update, and in particular to, a method and system for implementing a smart card remote operation by using a BIP protocol and an SCWS.

At present, most subscriber identity modules (Subscriber Identity Module, SIM) present mobile value-added services via an SIM card development kit menu, which is specifically implemented by utilizing over the air (Over The Air, OTA) technology through a short message channel. The OTA technology is a technology which is based on a short message mechanism, and implements downloading, deleting and updating of service menu in the SIM card through a mobile phone terminal and remote server. The technology enables the subscriber to acquire the data value-added services of personalized information services. Due to the limit of the short message channel, the data previously delivered by the SIM card and an OTA server takes bytes as unit basically, which can only include a small quantity of text information such as menu, access number and the like, have a low data-carrying capacity, and cannot download large application services. With the development of technology, the capacity of the SIM card has been increased from level K to level M and level G. A card provide can preset multiple applications by utilizing a large capacity card, so as to store files of various types such as multimedia and the like. Therefore, how to make the remote server to interact with the large data files stored on the SIM card becomes an urgent problem to be solved.

A smart card web server (Smart Card Web Server, SCWS) is a server built in a smart card, which may display files stored in the smart card to the subscriber in a web form according to the requests of the subscriber. The SCWS technology enables the mobile phone subscriber to conveniently look up the multimedia files of the smart card provider through a web form. However, present SCWS specifications do not specify how to implement information interaction between the remote management server and the smart card web server SCWS in the smart card, and cannot implement remote control and remote data update, and cannot configure and customize mobile phone contents.

US 2011/0047257 A1 discloses a system and a method for installing a smart card applet. A response message for an OTA message received from an external remote server is transmitted to form a communication channel based on HTTP (Hyper Text Transfer Protocol) between a smart card and the remote server. The applet is installed based on applet installation information received through the communication channel. A large scale applet is installed in a card within a short period of time.

The prior art still needs to be improved and developed.

A technical problem to be solved by the present invention is to providing a method and system for implementing a smart card remote operation by using a BIP protocol and an SCWS, which aims at solving the foregoing defects of the prior art, implements to perform remote control and data update on a smart card through a remote management server, avoids unnecessary interactive negotiation with the smart card, and takes a mobile phone as a gateway to implement identity authentication, data integrity verification and customizable access policies.

This problem is solved according to the features of the independent claim(s). Further embodiments result from the depending claims.

The technical solution adopted by the present invention to solve the technical problem is as follows:
A method for implementing a smart card remote operation by using a a smart card web server, SCWS, comprising the steps of:
   A, setting up a mobile phone gateway used for communication between a remote management server and a smart card on a mobile phone in advance;
   B, transmitting, by the remote management server, a short message for resetting a smart card web server to the mobile phone, and processing, by the smart card web server or a proxy program thereof, to obtain a communication request of the remote management server;
   C, instructing, by the smart card web server or the proxy program thereof, the mobile phone to start the mobile phone gateway through an SIM channel, monitoring and opening a local TCP/IP service port through the mobile phone gateway, and awaiting a connection to the remote management server;
   D, locating, by the remote management server, an IP address of the mobile phone in the network, connecting, as a client, the TCP/IP service port monitored by the mobile phone gateway, and setting up a connection with the smart card;
   E, writing, by the remote management server, data to be transmitted into the smart card through the mobile phone gateway, and receiving data information fed back by the smart card through the mobile phone gateway; and
   F, updating, by the remote management server, the smart card web server SCWS in a short message form to reconfigure the SIM channel, and instructing the mobile phone gateway to use a safe or an unsafe TCP/IP service port to perform data communication in a short message form..

In an embodiment, step A further comprises: setting up, by the mobile phone gateway, a communication channel with the remote management server through an HTTP/IP protocol.

According to an embodiment, step A further comprises: setting up, by the mobile phone gateway, an SIM channel used for communication with the smart card through a bearer independent protocol, and setting up a communication channel with the remote management server through an HTTP/IP protocol.

In an embodiment, step A further comprises: setting up, by the mobile phone gateway, an SIM channel used for communication with the smart card through a bearer independent protocol, wherein each communication channel is distinguished by using a different session identifier SID; all the connection and access data of the client is forwarded to the SID instructed by a corresponding UICC, and the SID physically identifies one SIM channel.

According to an embodiment, step E further comprises: performing, by the mobile phone gateway, recognition and authorization on the remote management server, and performing data verification on the data transmitted by the remote management server. According to the method, one remote management server corresponds with one or more SIM channels to perform synchronous update of data.

In an embodiment, step E further comprises: implementing, by the smart card which is a universal integrated circuit card, access permission authentication of the mobile phone terminal and network authentication through an application USIM preset in the UICC card.

According to the method, the smart card selects an HTTP/HTTPS to connect with the remote management server through the mobile phone gateway. In an embodiment, the header format of the HTTP/HTTPS needs to be negotiated and determined with the remote management server in advance.

A system for implementing a smart card remote operation by using a smart card web server SCWS, comprises:
- a preset module, used for setting up a mobile phone gateway used for communication between a remote management server and a smart card on a mobile phone in advance;
- a startup processing module, used for controlling a smart card web server SCWS or a proxy program thereof to instruct the mobile phone to start the mobile phone gateway through an SIM channel according to a short message for resetting the SCWS transmitted by the remote management server to the mobile phone; monitoring and opening a local TCP/IP service port through the mobile phone gateway, and awaiting a connection to the remote management server;
- a connection module, used for controlling the remote management server to locate an IP address of the mobile phone in the network, connecting, as a client, the TCP/IP service port monitored by the mobile phone gateway, and setting up a connection with the smart card;
- a data update module, used for the remote management server to write data to be transmitted into the smart card through the mobile phone gateway, and receiving data information fed back by the smart card through the mobile phone gateway; and
- a resetting module, used for the remote management server to update the smart card web server SCWS in a short message form to reconfigure the SIM channel, and instruct the mobile phone gateway in a short message form to use a safe or an unsafe TCP/IP service port to perform data communication.

In an embodiment, the mobile phone gateway sets up a communication channel with the remote management server through an HTTP/IP protocol.

According to an embodiment, the mobile phone gateway sets up an SIM channel used for communication with the smart card through a bearer independent protocol, and sets up a communication channel with the remote management server through an HTTP/IP protocol.

In an embodiment, the mobile phone gateway sets up an SIM channel used for communication with the smart card through a bearer independent protocol, each communication channel is distinguished by using a different session identifier SID; all the connection and access data of the client is forwarded to the SID instructed by a corresponding UICC, and the SID physically identifies one SIM channel.

According to an embodiment, the system further comprises: a recognition and authentication module, used for performing recognition and authorization on the remote management server through the mobile phone gateway, and performing data verification on the data transmitted by the remote management server.

The aforementioned characteristics, features and advantages of the invention as well as the way they are achieved will be further illustrated in connection with the following examples and considerations as discussed in view of the figures.
FIG. 1 is a flow chart of a method for implementing a smart card remote operation according to the present invention.
FIG.2 is a structural schematic diagram of a system for implementing a smart card remote operation according to the present application.
FIG.3 is a structural schematic diagram of a preferred embodiment of the system for implementing a smart card remote operation according to the present invention.

To make the objective, technical solution and advantages of the present invention more clear, the present invention is further described in details with reference to the drawings and embodiments hereinafter. It should be understood that the specific embodiments described here are merely used for explaining the present invention, but are not intended to limit the present invention.

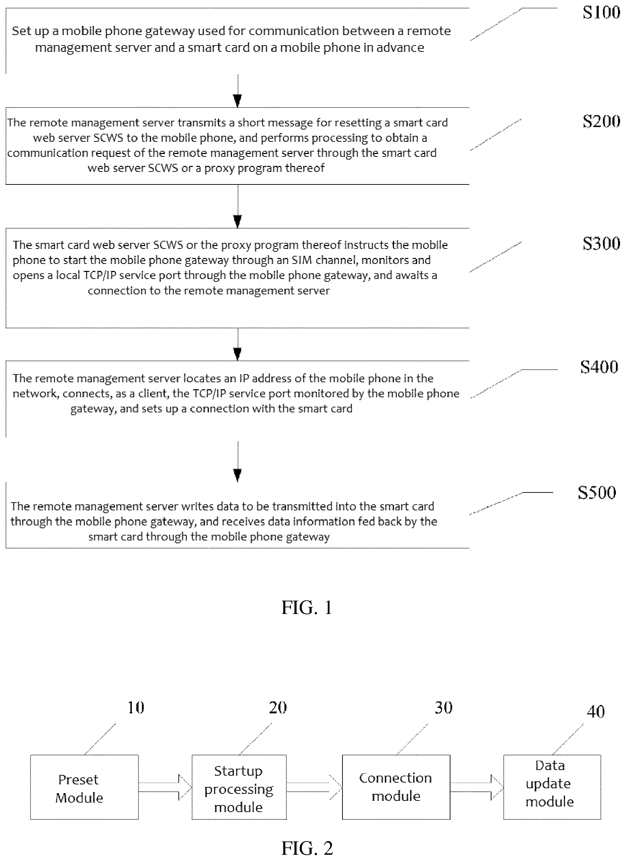

FIG. 1 is a method for implementing a smart card remote operation by using a BIP protocol and an SCWS provided by the present invention. As shown in FIG.1, the method comprises the following steps.

Step S100: Set up a mobile phone gateway used for communication between a remote management server and a smart card on a mobile phone in advance.

Step S200: The remote management server transmits a short message for resetting a smart card web server SCWS to the mobile phone, and performs processing to obtain a communication request of the remote management server through the smart card web server SCWS or a proxy program thereof.

Step S300: The smart card web server SCWS or the proxy program thereof instructs the mobile phone to start the mobile phone gateway through an SIM channel, monitors and opens a local TCP/IP service port through the mobile phone gateway, and awaits a connection to the remote management server.

Step S400: The remote management server locates an IP address of the mobile phone in the network, connects, as a client, the TCP/IP service port monitored by the mobile phone gateway, and sets up a connection with the smart card.

Step S500: The remote management server writes data to be transmitted into the smart card through the mobile phone gateway, and receives data information fed back by the smart card through the mobile phone gateway.

The foregoing steps will be described in details with reference to specific embodiments hereinafter.

The smart card of the present invention may be a universal integrated circuit card (Universal Integrated Circuit Cards, UICC), which implements access permission authentication of the mobile phone terminal and network authentication through an application USIM (SIM) preset in the UICC card, thus implementing mobile phone-card separation. In the present invention, the smart card is collectively referred to as an SIM card. The smart card according to the present invention is internally provided with an SCWS application. When the mobile phone is started, the mobile phone may initialize the UICC through an ISO/IEC7816 regulation. The mobile phone may initiatively select the SCWS application in the UICC, or the UICC after being started automatically starts the SCWS. The entrance path of the SCWS is stored in the first layer of file of the root file of the UICC, and is selected to start through an AID (Application Identifier, application identifier of the SIM card) entry.

The mobile phone supports base commands Terminal Profile, Envelope, Fetch and Terminal Response required by an SIM card application tool, and supports a Proactive command related to BIP, each client mode of Open Channel, Send Data, Receive Data, Close Channel as well as Get Channel Status and the like.

The present invention implements communication between the remote management server and the smart card by setting up the mobile phone gateway on the mobile phone, wherein the remote management server may be a network carrier, while the mobile phone gateway communicates with the smart card through a bearer independent protocol (Bearer Independent Protocol, BIP), and the mobile phone gateway communicates with the remote management server through an HTTP/IP protocol. The mobile phone gateway servers as a proxy for data forwarding therein to implement data gateways of different protocol stacks. When the SIM card is transmitted to the Receive Data Proactive Command APDU of the mobile phone, the data fed through a TCP connection associated with the remote management server is written in the SIM card, and a Terminal Response APDU is sent to the SIM card through the mobile phone to verify. However, in the Send Data Proactive Command APDU, the data to be sent to the remote management server by the SIM card is read and verified through the Terminal Response APDU, and sent to the remote management server in the associated TCP connection.

In concrete implementation, firstly, the remote management server sends a short message about the type of the SIM card to the mobile phone, and the mobile phone may transfer the information to the UICC through an Envelope APDU (Application Protocol Data Unit, application layer datagram). The UICC parses that this is a message related to the SCWS, hands the message over to the SCWS or the proxy program thereof to process. The SCWS or the proxy program thereof may select an SIM channel (basic channel or expanded channel), instruct the mobile phone on the SID of the channel that one Proactive command needs to be processed. The mobile phone uses a Fetch APDU command to obtain the Proactive command. The mobile phone starts the mobile phone gateway according to the instruction, opens a local TCP/IP service port, sets up a server mode gateway, and awaits a connection to the remote server as a client so as to perform data update on the UICC.

The ENVELOPE APDU is simply described hereinafter. The APDU of the UICC interacted with the mobile phone has five basic units and variable-length data combination. CLA refers to a command set, and the ENVELOPE here belongs to a UICC command set collection, having a value of 80. INS refers to a command code, and the command code value of the ENVELOPE is C2. P1 and P2 are command parameters, and Lc is a data length, and is an SIM card short message here, which is closely followed by the contents of the short message. The UICC after receiving the APDU, processes the CLA and INS of the command, and responds to a processing result. For example, a SW1 and SW2 value of 90 XX in a response state represents receiving the command and processing correctly.

The mobile phone gateway sets up a communication channel with the smart card through a bearer independent protocol (Bearer Independent Protocol, BIP), wherein each communication channel is distinguished by using a different session identifier SID; all the connection and access data of the client is forwarded to the SID instructed by a corresponding UICC, and the SID physically identifies one SIM channel.

When the remote management server manages the UICC, a PO-TCP (PPG Originated TCP connection establishment method, connection originated by PUSH gateway) technology is used to locate the IP address of the mobile phone in the network of the carrier; the remote management server and the TCP client are connected with a service port monitored by the mobile phone gateway, thus setting up a connection with the UICC through a session channel of the mobile phone gateway and the SIM card.

The remote management server after setting up a connection with the UICC, sends commands and data to the UICC through the mobile phone gateway, and the data information fed back by the UICC is also transmitted to the remote management server through the mobile phone gateway, thus implementing remote management and data update of the remote management server on the UICC card.

When the remote server and the UICC are in data communication, the mobile phone gateway may also perform recognition and authorization on the remote management server, and perform data verification on the data sent by the remote management server, so as to ensure the security of data interaction.

The remote management server of the present invention may also update the smart card web server SCWS in a short message form to reconfigure the SIM channel, and instruct the mobile phone gateway to use a safe or an unsafe TCP/IP service port to perform data communication in a short message form. To be specific: the remote management server sends an SIM card type short message through a mature OTA short message technology. The mobile phone after receiving the short message, packages the short message contents in an ENVELOPE type APDU, and transfers the short message contents to the UICC through an interface defined by a European Telecommunications Standards Institute Smart Card Platform (ETSI SCP). The UICC reconfigures the SCWS according to the instruction of the short message, and instructs the mobile phone to monitor the service port through an Open Channel related to UICC Server Mode command according to new requirements, and reconfigures the SIM channel, so as to give way for other applications or enhance security protection. Meanwhile, the remote management server may use a short message to instruct the mobile phone gateway to use a safe or an unsafe TCP/IP service port and the verification level of the connection. Therefore, different remote management servers may set up a plurality of channels for the UICC to perform synchronous update of data.

Further, during data update, the UICC may select a HTTP/HTTPS to connect with the remote management server, which may safely update bulk data contents including stored user manual, carrier yellow pages, advertisement information and the like. The request of the UICC is usually submitted to the remote management server in a HTTP POST command form. The header structure format of the HTTP/HTTPS needs to be negotiated with the remote management server in advance so as to prevent a third party from monitoring and forging. Certainly, digital certificate authentication may also be used as a replenishment of the SIM card authentication because the SIM card authentication may lose effect sometimes, for example, when a WIFI is accessed.

For the SIM card using the new standard of TS 102 600 of the European Telecommunications Standards Institute Smart Card Platform (ETSI SCP), if the mobile phone implements a USB-UICC interface, the SCWS may directly use a TCP/IP stack to connect to the remote management server, thus bypassing the BIP protocol, and updating the UICC data contents more effectively.

Based on the foregoing method for implementing a smart card remote operation by using a BIP protocol and an SCWS, the present invention further provides a system for implementing a smart card remote operation by using a BIP protocol and an SCWS. As shown in FIG.2, the system comprises:
a preset module 10, used for setting up a mobile phone gateway used for communication between a remote management server and a smart card on a mobile phone in advance;
a startup processing module 20, used for controlling a smart card web server SCWS or a proxy program thereof to instruct the mobile phone to start the mobile phone gateway through an SIM channel according to a short message for resetting the SCWS transmitted by the remote management server to the mobile phone; monitoring and opening a local TCP/IP service port through the mobile phone gateway, and awaiting a connection to the remote management server;
a connection module 30, used for controlling the remote management server to locate an IP address of the mobile phone in the network, connecting, as a client, the TCP/IP service port monitored by the mobile phone gateway, and setting up a connection with the smart card; and
a data update module 40, used for the remote management server to write data to be transmitted into the smart card through the mobile phone gateway, and receiving data information fed back by the smart card through the mobile phone gateway.

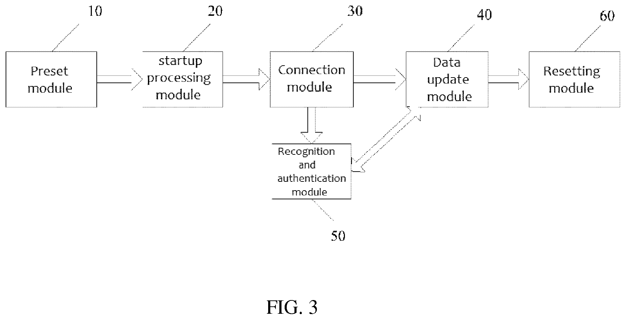

Further, as shown in FIG.3, the system further comprises: a recognition and authentication module 50, used for performing recognition and authorization on the remote management server through the mobile phone gateway, and performing data verification on the data transmitted by the remote management server; and a resetting module 60, used for the remote management server to update the smart card web server SCWS in a short message form to reconfigure the SIM channel, and instruct the mobile phone gateway to use a safe or an unsafe TCP/IP service port to perform data communication in a short message form.

It should be understood that the applications of the present invention are not limited to the foregoing examples. A person having ordinary skills in the art may make improvements or transformation according to the foregoing examples. For example, for using an SIM card passing the new standards of the TS102600 of the European Telecommunications Standards Institute Smart Card Platform (ETSI SCP), if the mobile phone implements a USB-UICC interface, the SCWS may directly use a TCP/IP stack to connect to the remote management server, thus bypassing the BIP protocol, and updating the UICC data contents more effectively. All the improvements and transformation shall fall within the protection scope of the claims of the present invention.

## Claims

1. A method for implementing a smart card remote operation by using a smart card web server, comprising the steps of:
A, setting up a mobile phone gateway used for communication between a remote management server and a smart card on a mobile phone in advance (S100);
B, transmitting, by the remote management server, a short message for resetting a smart card web server to the mobile phone, and processing the short message, by the smart card web server or a proxy program thereof, to obtain a communication request of the remote management server (S200);
C, instructing, by the smart card web server or the proxy program thereof, the mobile phone to start the mobile phone gateway through a SIM channel, monitoring and opening a local TCP/IP service port through the mobile phone gateway, and awaiting a connection to the remote management server (S300);
D, locating, by the remote management server, an IP address of the mobile phone in the network, connecting, as a client, the TCP/IP service port monitored by the mobile phone gateway, and setting up a connection with the smart card (S400);
E, writing, by the remote management server, data to be transmitted into the smart card through the mobile phone gateway, and receiving data information fed back by the smart card through the mobile phone gateway (S500); and
F, updating, by the remote management server, the smart card web server in a short message form to reconfigure the SIM channel, and instructing the mobile phone gateway in a short message form to use a safe or an unsafe TCP/IP service port to perform data communication.

2. The method according to claim 1, wherein step A further comprises: setting up, by the mobile phone gateway, an SIM channel used for communication with the smart card through a bearer independent protocol, and setting up a communication channel with the remote management server through an HTTP/IP protocol.

3. The method according to any of the preceding claims, wherein the smart card selects an HTTP/HTTPS to connect with the remote management server through the mobile phone gateway.

4. The method according to any of the preceding claims, wherein step A (S100) further comprises: setting up, by the mobile phone gateway, an SIM channel used for communication with the smart card through a bearer independent protocol, wherein each communication channel is distinguished by using a different session identifier SID, wherein all the connection and access data of the client is forwarded to the SID instructed by a corresponding UICC, and wherein the SID physically identifies one SIM channel.

5. The method according to any of the preceding claims, wherein step A (S100) further comprises: setting up, by the mobile phone gateway, a communication channel with the remote management server through an HTTP/IP protocol.

6. The method according to any of the preceding claims, wherein step E (S500) further comprises: performing, by the mobile phone gateway, recognition and authorization on the remote management server, and performing data verification on the data transmitted by the remote management server.

7. The method according to any of the preceding claims, wherein one remote management server corresponds with one or more SIM channels to perform synchronous update of data.

8. The method according to any of the preceding claims, wherein step E (S500) further comprises: implementing, by the smart card which is a universal integrated circuit card, access permission authentication of the mobile phone terminal and network authentication through an application USIM preset in the UICC card.

9. A system for implementing a smart card remote operation by using a smart card web server , wherein the system comprises:
- a preset module (10), used for setting up a mobile phone gateway used for communication between a remote management server and a smart card on a mobile phone in advance;
- a startup processing module (20), used for controlling a smart card web server or a proxy program thereof to instruct the mobile phone to start the mobile phone gateway through an SIM channel according to a short message for resetting the smart card web server transmitted by the remote management server to the mobile phone; monitoring and opening a local TCP/IP service port through the mobile phone gateway, and awaiting a connection to the remote management server;
- a connection module (30), used for controlling the remote management server to locate an IP address of the mobile phone in the network, connecting, as a client, the TCP/IP service port monitored by the mobile phone gateway, and setting up a connection with the smart card;
- a data update module (40), used for the remote management server to write data to be transmitted into the smart card through the mobile phone gateway, and receiving data information fed back by the smart card through the mobile phone gateway; and
- a resetting module (60), used for the remote management server to update the smart card web server SCWS in a short message form to reconfigure the SIM channel, and instruct the mobile phone gateway in a short message form to use a safe or an unsafe TCP/IP service port to perform data communication.

10. The system according to claim 9 wherein the mobile phone gateway sets up an SIM channel used for communication with the smart card through a bearer independent protocol, and sets up a communication channel with the remote management server through an HTTP/IP protocol.

11. The system according to any of the claims 9 or 10, wherein the mobile phone gateway sets up an SIM channel used for communication with the smart card through a bearer independent protocol, each communication channel is distinguished by using a different session identifier SID; all the connection and access data of the client is forwarded to the SID instructed by a corresponding UICC, and the SID physically identifies one SIM channel.

12. The system according to any of claims 9 or 11, wherein the mobile phone gateway sets up a communication channel with the remote management server through an HTTP/IP protocol.

13. The system according to any of claims 9 to 12, wherein the system further comprises: a recognition and authentication module (50), used for performing recognition and authorization on the remote management server through the mobile phone gateway, and performing data verification on the data transmitted by the remote management server.

## Patentansprüche

1. Verfahren zum Implementieren eines Smartcard-Fernbetriebs durch Verwenden eines Smartcard-Webservers, das die folgenden Schritte umfasst:
A, Einrichten eines Mobiltelefongateways, das für eine Kommunikation zwischen einem Fernverwaltungsserver und einer Smartcard in einem Mobiltelefon verwendet wird (S100);
B, Übertragen, durch den Fernverwaltungsserver, einer Kurznachricht zum Zurücksetzen eines Smartcard-Webservers zum Mobiltelefon und Verarbeiten der Kurznachricht durch den Smartcard-Webserver oder ein Proxyprogramm davon, um eine Kommunikationsanforderung des Fernverwaltungsservers zu erhalten (S200);
C, Anweisen des Mobiltelefons durch den Smartcard-Webserver oder das Proxyprogramm davon, das Mobiltelefongateway über einen SIM-Kanal zu starten, Überwachen und Öffnen eines lokalen TCP/IP-Dienstanschlusses über das Mobiltelefongateway und Erwarten einer Verbindung zum Fernverwaltungsserver (5300) ;
D, Lokalisieren, durch den Fernverwaltungsserver, einer IP-Adresse des Mobiltelefons im Netzwerk, Verbinden, als ein Client, des TCP/IP-Dienstanschlusses, der vom Mobiltelefongateway überwacht wird, und Einrichten einer Verbindung mit der Smartcard (S400);
E, Schreiben, durch den Fernverwaltungsserver, von Daten, die über das Mobiltelefongateway zur Smartcard zu übertragen sind, und Empfangen von Dateninformationen, die über das Mobiltelefongateway von der Smartcard rückgemeldet werden (S500); und
F, Aktualisieren, durch den Fernverwaltungsserver, des Smartcard-Webservers in einer Kurznachrichtform, um den SIM-Kanal neu zu rekonfigurieren, und Anweisen des Mobiltelefongateways in einer Kurznachrichtform, einen sicheren oder einen unsicheren TCP/IP-Dienstanschluss zu verwenden, um eine Datenkommunikation durchzuführen.

2. Verfahren nach Anspruch 1, wobei Schritt A ferner Folgendes umfasst: Einrichten, durch das Mobiltelefongateway, eines SIM-Kanals, der für eine Kommunikation mit der Smartcard über ein betreiberunabhängiges Protokoll verwendet wird, und Einrichten eines Kommunikationskanals über ein HTTP/IP-Protokoll mit dem Fernverwaltungsserver.

3. Verfahren nach einem der vorhergehenden Ansprüche, wobei die Smartcard ein HTTP/HTTPS auswählt, um sich über das Mobiltelefongateway mit dem Fernverwaltungsserver zu verbinden.

4. Verfahren nach einem der vorhergehenden Ansprüche, wobei Schritt A (S100) ferner Folgendes umfasst:
Einrichten, durch das Mobiltelefongateway, eines SIM-Kanals, der für eine Kommunikation mit der Smartcard über ein betreiberunabhängiges Protokoll verwendet wird, wobei jeder Kommunikationskanal durch Verwenden einer anderen Sitzungskennung (Session Identifier, SID) unterschieden wird, wobei, angewiesen von einer entsprechenden UICC, alle Verbindungs- und Zugangsdaten des Client zur SID weitergeleitet werden und wobei die SID einen SIM-Kanal physisch identifiziert.

5. Verfahren nach einem der vorhergehenden Ansprüche, wobei Schritt A (S100) ferner Folgendes umfasst:
Einrichten, durch das Mobiltelefongateway, eines Kommunikationskanals mit dem Fernverwaltungsserver über ein HTTP/IP-Protokoll.

6. Verfahren nach einem der vorhergehenden Ansprüche, wobei Schritt E (S500) ferner Folgendes umfasst:
Durchführen, durch das Mobiltelefongateway, einer Erkennung und Autorisierung auf dem Fernverwaltungsserver und Durchführen einer Datenverifizierung an den Daten, die vom Fernverwaltungsserver übertragen werden.

7. Verfahren nach einem der vorhergehenden Ansprüche, wobei ein Fernverwaltungsserver mit einem oder mehreren SIM-Kanälen korrespondiert, um eine synchrone Aktualisierung von Daten durchzuführen.

8. Verfahren nach einem der vorhergehenden Ansprüche, wobei Schritt E (S500) ferner Folgendes umfasst:
Implementieren durch die Smartcard, bei der es sich um eine Universal Integrated Circuit Card handelt, einer Zugangsberechtigungsauthentifizierung des Mobiltelefonendgeräts und einer Netzwerkauthentifizierung über eine USIM-Anwendungsvoreinstellung auf der UICC-Karte.

9. System zum Implementieren eines Smartcard-Fernbetriebs durch Verwenden eines Smartcard-Webservers, wobei das System Folgendes umfasst:
- ein Voreinstellungsmodul (10), das zum Einrichten eines Mobiltelefongateways verwendet wird, das für eine Kommunikation zwischen einem Fernverwaltungsserver und einer Smartcard in einem Mobiltelefon verwendet wird;
- ein Startverarbeitungsmodul (20), das zum Steuern eines Smartcard-Webservers oder eines Proxyprogramms davon, um das Mobiltelefon gemäß einer Kurznachricht zum Zurücksetzen des Smartcard-Webservers, die vom Fernverwaltungsserver zum Mobiltelefon übertragen wird, anzuweisen, das Mobiltelefongateway über einen SIM-Kanal zu starten; zum Überwachen und Öffnen eines lokalen TCP/IP-Dienstanschlusses über das Mobiltelefongateway und zum Erwarten einer Verbindung zum Fernverwaltungsserver verwendet wird;
- ein Verbindungsmodul (30), das zum Steuern des Fernverwaltungsservers, um eine IP-Adresse des Mobiltelefons im Netzwerk zu lokalisieren, zum Verbinden, als einen Client, des TCP/IP-Dienstanschlusses, der vom Mobiltelefongateway überwacht wird, und zum Einrichten einer Verbindung mit der Smartcard verwendet wird;
- ein Datenaktualisierungsmodul (40), das zum Schreiben durch den Fernverwaltungsserver von Daten, die über das Mobiltelefongateway zur Smartcard zu übertragen sind, und zum Empfangen von Dateninformationen, die von der Smartcard über das Mobiltelefongateway rückgemeldet werden, verwendet wird; und
- ein Rücksetzmodul (60), das zum Aktualisieren des Smartcard-Webservers SCWS durch den Fernverwaltungsserver in einer Kurznachrichtenform, um den SIM-Kanal neu zu rekonfigurieren, und zum Anweisen des Mobiltelefongateways in einer Kurznachrichtenform, einen sicheren oder einen unsicheren TCP/IP-Dienstanschluss zu verwenden, um eine Datenkommunikation durchzuführen, verwendet wird.

10. System nach Anspruch 9, wobei das Mobiltelefongateway einen SIM-Kanal einrichtet, der für eine Kommunikation mit der Smartcard über ein betreiberunabhängiges Protokoll verwendet wird, und über ein HTTP/IP-Protokoll einen Kommunikationskanal mit dem Fernverwaltungsserver einrichtet.

11. System nach einem der Ansprüche 9 oder 10, wobei das Mobiltelefongateway einen SIM-Kanal einrichtet, der für eine Kommunikation mit der Smartcard über ein betreiberunabhängiges Protokoll verwendet wird, wobei jeder Kommunikationskanal durch Verwenden einer anderen Sitzungskennung (Session Identifier, SID) unterschieden wird; angewiesen von einer entsprechenden UICC, alle Verbindungs- und Zugangsdaten des Client zur SID weitergeleitet werden und die SID einen SIM-Kanal physisch identifiziert.

12. System nach einem der Ansprüche 9 oder 11, wobei das Mobiltelefongateway über ein HTTP/IP-Protokoll einen Kommunikationskanal mit dem Fernverwaltungsserver einrichtet.

13. System nach einem der Ansprüche 9 bis 12, wobei das System ferner Folgendes umfasst: ein Erkennungs- und Authentifizierungsmodul (50), das zum Durchführen einer Erkennung und Autorisierung auf dem Fernverwaltungsserver über das Mobiltelefongateway und zum Durchführen einer Datenverifizierung an den Daten, die vom Fernverwaltungsserver übertragen werden, verwendet wird.

## Revendications

1. Procédé de mise en oeuvre d'une opération distante sur carte à puce par l'utilisation d'un serveur web de carte à puce, comprenant les étapes consistant à :
A, établir à l'avance une passerelle de téléphone mobile utilisée pour la communication entre un serveur de gestion distant et une carte à puce située sur un téléphone mobile (S100) ;
B, envoyer au téléphone mobile, par le serveur de gestion distant, un message court pour la réinitialisation d'un serveur web de carte à puce, puis traiter le message court, par le serveur web de carte à puce ou un programme mandataire qui lui est associé, pour obtenir une demande de communication du serveur de gestion distant (S200) ;
C, ordonner au téléphone mobile, par le serveur web de carte à puce ou un programme mandataire qui lui est associé, de démarrer la passerelle de téléphone mobile au moyen d'un canal SIM, surveiller et ouvrir un port de service TCP/IP local au moyen de la passerelle de téléphone mobile, puis attendre une connexion avec le serveur de gestion distant (S300) ;
D, localiser, par le serveur de gestion distant, une adresse IP du téléphone mobile dans le réseau, connecter, en tant que client, le port de service TCP/IP surveillé par la passerelle de téléphone mobile, puis établir une connexion avec la carte à puce (S400) ;
E, écrire, par le serveur de gestion distant, des données à émettre dans la carte à puce au moyen de la passerelle de téléphone mobile, et recevoir des informations de données renvoyées par la carte à puce au moyen de la passerelle de téléphone mobile (S500) ; et
F, mettre à jour, par le serveur de gestion distant, le serveur web de carte à puce dans un formulaire de message court pour reconfigurer le canal SIM, et ordonner à la passerelle de téléphone mobile, dans un formulaire de message court d'utiliser un port de service TCP/IP sécurisé ou non sécurisé pour effectuer une communication de données.

2. Procédé selon la revendication 1, dans lequel l'étape A comprend également les étapes consistant à : établir, par la passerelle de téléphone mobile, un canal SIM utilisé pour la communication avec la carte à puce au moyen d'un protocole indépendant du support, et établir un canal de communication avec le serveur de gestion distant au moyen d'un protocole HTTP/IP.

3. Procédé selon l'une quelconque des revendications précédentes, dans lequel la carte à puce sélectionne un HTTP/HTTPS pour se connecter au serveur de gestion distant au moyen de la passerelle de téléphone mobile.

4. Procédé selon l'une quelconque des revendications précédentes, dans lequel l'étape A (S100) comprend également l'étape consistant à : établir, par la passerelle de téléphone mobile, un canal SIM utilisé pour la communication avec la carte à puce au moyen d'un protocole indépendant du support, chaque canal de communication étant différencié par l'utilisation d'un identifiant de session, SID, distinct, toutes les données de connexion et d'accès du client étant expédiées au SID indiqué par une UICC correspondante, et le SID identifiant physiquement un canal SIM.

5. Procédé selon l'une quelconque des revendications précédentes, dans lequel l'étape A (S100) comprend également l'étape consistant à : établir, par la passerelle de téléphone mobile, un canal de communication avec le serveur de gestion distant au moyen d'un protocole HTTP/IP.

6. Procédé selon l'une quelconque des revendications précédentes, dans lequel l'étape E (S500) comprend également les étapes consistant à : effectuer, par la passerelle de téléphone mobile, une reconnaissance et une autorisation sur le serveur de gestion distant, et effectuer une vérification de données sur les données envoyées par le serveur de gestion distant.

7. Procédé selon l'une quelconque des revendications précédentes, dans lequel un serveur de gestion distant correspond avec un ou plusieurs canaux SIM pour effectuer une mise à jour synchrone des données.

8. Procédé selon l'une quelconque des revendications précédentes, dans lequel l'étape E (S500) comprend également l'étape consistant à : mettre en oeuvre, par la carte à puce qui est une carte à circuit intégré universelle, une authentification de permission d'accès du terminal de téléphone mobile et une authentification de réseau au moyen d'un USIM d'application prédéfini dans la carte UICC.

9. Système de mise en oeuvre d'une opération distante sur carte à puce par l'utilisation d'un serveur web de carte à puce, le système comprenant :
- un module prédéfini (10), servant à établir à l'avance une passerelle de téléphone mobile utilisée pour la communication entre un serveur de gestion distant et une carte à puce située sur un téléphone mobile ;
- un module de traitement de démarrage (20), servant à commander un serveur web de carte à puce ou un programme mandataire qui lui est associé pour ordonner au téléphone mobile de démarrer la passerelle de téléphone mobile au moyen d'un canal SIM selon un message court pour la réinitialisation d'un serveur web de carte à puce envoyé par le serveur de gestion distant au téléphone mobile ; à surveiller et ouvrir un port de service TCP/IP local au moyen de la passerelle de téléphone mobile, puis attendre une connexion avec le serveur de gestion distant ;
- un module de connexion (30), servant à commander le serveur de gestion distant pour lui faire localiser une adresse IP du téléphone mobile dans le réseau, à connecter, en tant que client, le port de service TCP/IP surveillé par la passerelle de téléphone mobile, puis établir une connexion avec la carte à puce ;
- un module de mise à jour de données (40), utilisé pour le serveur de gestion distant pour écrire les données à émettre dans la carte à puce au moyen de la passerelle de téléphone mobile, et recevoir des informations de données renvoyées par la carte à puce au moyen de la passerelle de téléphone mobile ; et
- un module de réinitialisation (60), utilisé par le serveur de gestion distant pour mettre à jour le serveur web de carte à puce SCWS dans un formulaire de message court pour reconfigurer le canal SIM, et ordonner à la passerelle de téléphone mobile, dans un formulaire de message court, d'utiliser un port de service TCP/IP sécurisé ou non sécurisé pour effectuer une communication de données.

10. Système selon la revendication 9, dans lequel la passerelle de téléphone mobile établit un canal SIM utilisé pour la communication avec la carte à puce au moyen d'un protocole indépendant du support, et établit un canal de communication avec le serveur de gestion distant au moyen d'un protocole HTTP/IP.

11. Système selon l'une quelconque des revendications 9 et 10, dans lequel la passerelle de téléphone mobile établit un canal SIM utilisé pour la communication avec la carte à puce au moyen d'un protocole indépendant du support, chaque canal de communication étant différencié par l'utilisation d'un identifiant de session, SID, distinct ; toutes les données de connexion et d'accès du client sont expédiées au SID indiqué par une UICC correspondante, et le SID identifie physiquement un canal SIM.

12. Système selon l'une quelconque des revendications 9 et 11, dans lequel la passerelle de téléphone mobile établit un canal de communication avec le serveur de gestion distant au moyen d'un protocole HTTP/IP.

13. Système selon l'une quelconque des revendications 9 à 12, le système comprenant également : un module de reconnaissance et d'authentification (50), servant à effectuer une reconnaissance et une autorisation sur le serveur de gestion distant au moyen de la passerelle de téléphone mobile, et à effectuer une vérification de données sur les données envoyées par le serveur de gestion distant.
